# EUROPEAN PATENT APPLICATION

(11) **EP 2 388 356 A1**
(43) Date of publication of application: **23.11.2011**
(21) Application number: 09838217.9
(22) Date of filing: 14.10.2009
(51) Int. Cl.: C23F 11/00, B32B 15/08

(54) **SURFACE-TREATED STEEL SHEET PROVIDED WITH ANTIRUST COATING FILM AND METHOD FOR PRODUCING SAME**

(30) Priority: 19.01.2009 JP 2009009287
(71) Applicant: Toyo Kohan Co., Ltd., Tokyo 102-8447 (JP)
(72) Inventor: ISHIHARA, Kazuhiko, Kudamatsu-shi Yamaguchi 744-8611 (JP); TOMOMORI, Tatsuo, Kudamatsu-shi Yamaguchi 744-8611 (JP); YAMANE, Eiji, Kudamatsu-shi Yamaguchi 744-8611 (JP); MINAGI, Hideyuki, Kudamatsu-shi Yamaguchi 744-8611 (JP)
(74) Representative: Vossius & Partner
(86) International application number: PCT/JP2009/005366
(87) International publication number: WO 2010/082247

(57) **Abstract**

A surface-treated steel sheet having a Co layer, wherein oxidation of the surface is prevented without deteriorating characteristics such as electrical conductivity. A surface-treated steel sheet which is provided with a Co layer on the surface is immersed in an antirust agent, which contains a fatty acid amine and uses water as a solvent, and then dried, thereby forming an antirust coating film on the surface of the surface-treated steel sheet. The antirust coating film containing the fatty acid amine has a thickness of 10-500 AA (in terms of SiO2) as determined by XPS depth analysis. Preferably, the fatty acid amine is benzenemethanamine or trimethylamine, and more preferably, the fatty acid amine additionally contains benzotriazole.

## Description

### FIELD OF THE INVENTION

The present invention relates to rust inhibition of the surface treated steel sheet on which surface it has a Co layer.

### BACKGROUND OF THE INVENTION

Conventionally, as the surface treated steel sheet which has a Co layer on its surface has characteristics of having excellent corrosion resistance and electrical conductivity, various ways of usage have been considered such as using for a case of batteries. For example, in Patent Reference 1, a cold strip is described, comprised of electrolytic Ni layer of 1 or 6µm on the steel sheet and electrolytic Co layer of 0.01 or 1.0µm on that, then after that having been heat treated at the temperature of 580°C or 710°C to gain a diffusion layer.

### Prior Art Reference

### Patent Reference

Patent Reference1: Japanese Patent Publication No. H03-17916A.

### SUMMARY OF THE INVENTION

### Object of the invention

Since the cold strip described in Patent Reference 1 has a Co layer on its surface, on the one hand it has a benefit of excellent corrosion resistance, but on the other hand, it has a problem of being oxidized and tarnishing easily.
By this oxidization, there is a case that characteristics such as electrical conductivity and so forth changes. When the steel sheet having a Co layer is used for such as battery cases, this might influence on the characteristics of products such as batteries. Therefore, the object of the present invention is to provide surface treated steel sheet with a Co layer inhibiting oxidization of the surface without losing the required characteristics.

### Method to solve the problem

(1) The surface treated steel sheet in the present invention has a characteristic of having a film of rust inhibitor including fatty acid amine whose thickness is 10 ∼ 500Å (SiO₂ conversion) measured by XPS depth measurement on the surface treated steel sheet that is provided a Co layer on its surface.
(2) The surface treated steel sheet in the present invention according to (1) is characterized by said rust inhibitor film including fatty acid amine whose thickness is 50 ∼ 300Å (SiO₂ conversion) by using XPS depth measurement.
(3) The surface treated steel sheet in the present invention according to (1) or (2) is characterized by said fatty acid amine is either benzenmethanamine or trimethylamine.
(4) The method of manufacturing the surface treated steel sheet in the present invention according to any one of (1) ∼ (3) is characterized by said rust inhibitor furthermore includes benzotriazole.
(5) The method of manufacturing the surface treated steel sheet in the present invention is characterized by making a surface treated steel sheet provided a Co layer on the surface immersed into rust inhibitor including fatty acid amine and using water as a solvent, and letting it dry to attain a rust inhibitor film on the surface of the surface treated steel sheet.
(6) The method of manufacturing the surface treated steel sheet in the present invention is characterized by said fatty acid amine is either benzenmethanamine or trimethylamine.
(7) The method of manufacturing the surface treated steel sheet in the present invention according to (5) or (6) is characterized by said rust inhibitor furthermore includes benzotriazole.
(8) The method of manufacturing the surface treated steel sheet in the present invention according to any one of (5) ∼ (7) is characterized by the concentration of said rust inhibitor is 0.1 ∼ 1.0 wt%.
(9) The method of manufacturing the surface treated steel sheet in the present invention according to any one of (5) ∼ (7) is characterized by the concentration of said rust inhibitor is 0.3 ∼ 0.7 wt%.

### Effects of the invention

The surface treated steel sheet having a Co layer in the present invention has a characteristic of having excellent corrosion resistance and inhibiting oxidization and tarnishing as its surface layer is provided with a rust inhibitor film. Therefore, it has excellent electrical conductivity if it is applied to electric components such as battery cases.

### BRIEF DESCRIPTION OF THE DRAWINGS

[Figure 1] A cross section to show the embodiment 1 of the surface treated steel sheet in the present invention.
[Figure 2] A cross section to show the embodiment 2 of the surface treated steel sheet in the present invention.
[Figure 3] A cross section to show the embodiment 3 of the surface treated steel sheet in the present invention.
[Figure 4] A cross section to show the embodiment 4 of the surface treated steel sheet in the present invention.

### DETAILED DESCRIPTION OF THE INVENTION (DESCRIPTION OF EMBODIMENTS)

### (Embodiment 1)

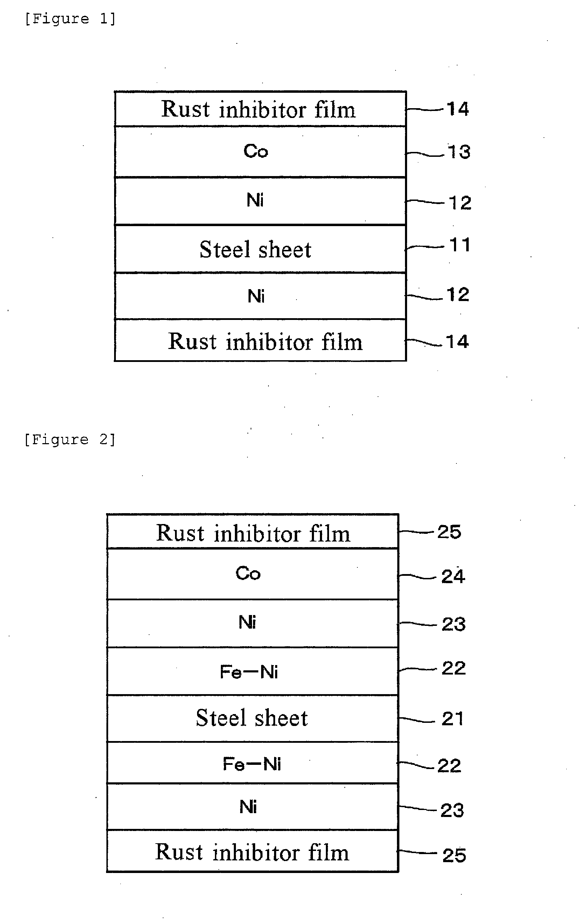

Embodiment 1 of the surface treated steel sheet having a rust inhibitor film in the present invention is described in Figure 1. In Figure 1, 11 is steel sheet, 12 is a Ni plating layer, 13 is a Co layer and 14 is a rust inhibitor film.

### (Steel sheets)

As material plates (steel sheets) for the surface treated steel sheets in the present invention, low carbon aluminum killed steel is normally preferably used.
Furthermore, non-aging ultralow carbon steel is used being added with niobium, boron and titanium.
For the embodiment 1 of the surface treated steel sheet, after being cold striped steel sheets as material plates are treated with electrolytic cleaning, annealing and temper rolling. Then, Ni is plated on the both sides of the surface and furtherer on the one side of the surface Co plating is conducted.

For Ni plating, non-glossy plating baths exemplified in the following can be used. The thickness of plating is normally preferable in the range of 0.5 ∼ 3µm. When it is less than 0.5µm, steel exposure is so large that rust resistance is deteriorated. Although it can be thicker than 3µm, being too thick is not economical.
(One of examples for plating conditions with usage of non-glossy plating baths)
Nickel sulfate (NiSO₄· 6H₂O): 250g/L
Nickel chloride (NiCl₂· 6H₂O): 50g/L
Boric acid (H₃Bo₃): 30g/L
Pit suppressant: 2g/L
Bath pH: 3.6 ∼ 4.6 (to be adjusted with sulfuric acid)

| | |
|---|---|
| Bath temperature: | 60°C |
| Current density: | 20A/dm² |

In addition, semi-glossy plating baths exemplified in the following can also be used. Semi-glossy Ni plating is conducted by adding polyoxyethylene adduct of unsaturated alcohol and unsaturated carboxylic acid formaldehyde properly as semi-glossy agent into sulfuric acid Ni bath. The thickness of plating can be the same with the case of non-glossy Ni playing above mentioned.
(One of examples for plating conditions with usage of semi-glossy plating baths)
Nickel sulfate (NiSO₄· 6H₂O): 300g/L
Nickel chloride (NiCl₂· 6H₂O): 45g/L
Boric acid (H₃BO₃): 30g/L
Unsaturated alcohol with polyoxyethylene adduct: 3.0g/L
Unsaturated carboxylic acid formaldehyde: 3.0g/L
Pit suppressant: 2g/L
Bath pH: 3.6 ∼ 4.6 (to be adjusted with sulfuric acid)
Bath temperature: 60°C
Current density: 20A/dm²

After treating Ni playing, Co plating is conducted on the one side of the surface. For Co plating, Co plating baths exemplified in the following can be used. The thickness of plating is preferred to fall in the range of 0.02 ∼ 0.4µm. If it is less than 0.02µm Ni explosion is so large that it would be difficult to keep the equal thickness of film that might be necessary for battery performance. If it is thicker than 0.4µm, as the thicker the Co plating becomes, batteries' characteristic of discharge might deteriorate more or less, therefore it is a problem.
(One of examples for plating conditions with usage of Co plating baths)

| | |
|---|---|
| Cobalt sulfate (CoSO₄· 6H₂O): | 250g/L |
| Cobalt chloride (CoCl₂· 6H₂O): | 95g/L |
| Boric acid (H₃Bo₃): | 30g/L |
| NaCl: | 20g/L |

Bath pH: 3.6 ∼ 4.6 (to be adjusted with sulfuric acid)

| | |
|---|---|
| Bath temperature: | 60°C |
| Current density: | 20A/dm² |

### (Composition of the rust inhibitor film)

In the present invention, on the surface treated steel sheet having a Co layer on its surface, rust inhibitor film including fatty acid amine is provided to prevent oxidization of the Co layer.
The rust inhibitor film is comprised of rust inhibitor made of fatty acid amine as the main ingredient. The concrete examples for fatty acid amines (organic amines) are such as benzenmethanamine, trimethylamine, diethylamine, dibuthylamine, dimethylethanolamine, diethylethanolamine, monoethanolamine, diethanolamine, benzomethanamine and so forth; and from the viewpoint of having especially excellent rust inhibition among them, benzenmethanamine or trimethylamine are especially preferable. These can be combined together.
Furthermore, buthylamine, pentylamine, octylamine, 2-ethylhexylamine, nonylamine, decylamine, undecylamine, laurylamine tridecylamine, tetradecylamine, pentadecylamine, hexadecylamine, heptadecylamine, stearylamine and so forth can be also used.

In addition to the fatty acid amines mentioned above, in order to improve rust inhibition furtherer, benzotriazole as semi rust inhibitor can be included too. The ratio of combining benzotriazcle with the fatty acid amines mentioned above is preferred to be combining benzotriazole at the ratio of 0.2 ∼ 2wt% to the fatty acid amines.
Furthermore, in order to maintain stability of the solution of the rust inhibitor and have inhibition of emulsifying, it is possible to use the combined solution that 40 ∼ 80 wt% of carboxylic acid is added to the combined solution mentioned above.
Even if the stability or inhibition of emulsifying of the solution is not objected particularly, if emulsifying and such does not occur during the process, carboxylic acid is not essential ingredient. Instead of carboxylic acid, another material that has the same effects of stabilizing the solution or inhibiting emulsifying can be added.
In order to keep the uniformity of the combined rust inhibitor, 0.25 wt% of urea can be added to the combined solution mentioned above. An aqueous solution with the concentration of 0.1 ∼ 1wt% that is gained by diluting the above mentioned rust inhibitor can be used for the immersion solution. Especially, the aqueous solution with the concentration of 0.3 ∼ 0.7wt% is preferable.
If it is less than 0.1wt%, the rust inhibitor film is too thin to have satisfying rust inhibition effect. And if it is more than 1 wt%, the rust inhibitor film becomes so thick that it might cause stains like specks.
The specific reason why the aqueous solution with the concentration of 0.3 ∼ 0.7wt% should be used is because it helps to accomplish the more reliable rust inhibition and to prevent stains like specks.

As the method of providing rust inhibitor films with the surface treated steel sheets, continuous treatments would be conducted in the following while rewinding the coils in which the surface treated steel sheets are rolled.
After water cleansing and drying with a dryer, the surface treated steel sheet with Co plating is dipped into the aqueous solution that includes rust inhibitor and then is deprived of unnecessary rust inhibitor solution by roll drawing, and once again it is dried with a dryer.
As for the thickness of the rust inhibitor film, it is preferable to fall in the range of 10 ∼ 500 Å. When the thickness is less than 10 Å the Co layer causes oxidization and tarnish. On the other hand, if the thickness is larger than 500 Å, separations might appear or when applied to as such battery cases, separations might appear over time. What is more preferable is to have the thickness in the range of 50 ∼ 300 Å. Having 50 Å or more of thickness can inhibit the rust inhibitor film's thinning over time and prevent it from tarnishing. And also having 300 Å or less of thickness will not produce any precipitation over time.

### (Embodiment 2) .

Embodiment 2 of the surface treated steel sheet having a rust inhibitor film in the present invention is described in Figure 2. In Figure 2, 21 is steel sheet, 22 is a Fe-Ni diffusion treated layer, 23 is a Ni plating layer, 24 is a Co layer and 25 is a rust inhibitor film.
In Embodiment 2, on the same steel sheet with Embodiment 1, Ni plating treatment is provided.
After providing the Ni plating treatment mentioned above, diffusion treatment by heat treatment is conduced.
The diffusion treatment can be conducted by using systems such as a uni-flow annealing furnace or a continuous annealing furnace, in the non-oxidizing atmosphere or in the reducing atmosphere, such as the atmosphere gas comprised of 5% by hydrogen gas with the remainder being a nitrogen gas.
The proper temperature for the diffusion treatment is in the range of 400 ∼ 800°C, more preferably in the range of 450 ∼ 800°C.
The proper time for the diffusion treatment can be conducted for the extent to which part of Ni of the Ni plating layer remains.

Next, strike Ni plating is conducted on the Fe-Ni diffusion treated layer provided with heat diffusion treatment, as well as part of the Ni layer on top of that layer. Before the surface of strike Ni plating becomes dry, the same Co plating treatment conducted in Embodiment 1 will be provided. Furthermore after this, as is the same with Embodiment 1, on the both sides of the surface treated steel sheet, the rust inhibitor films are provided.

### (Embodiment 3)

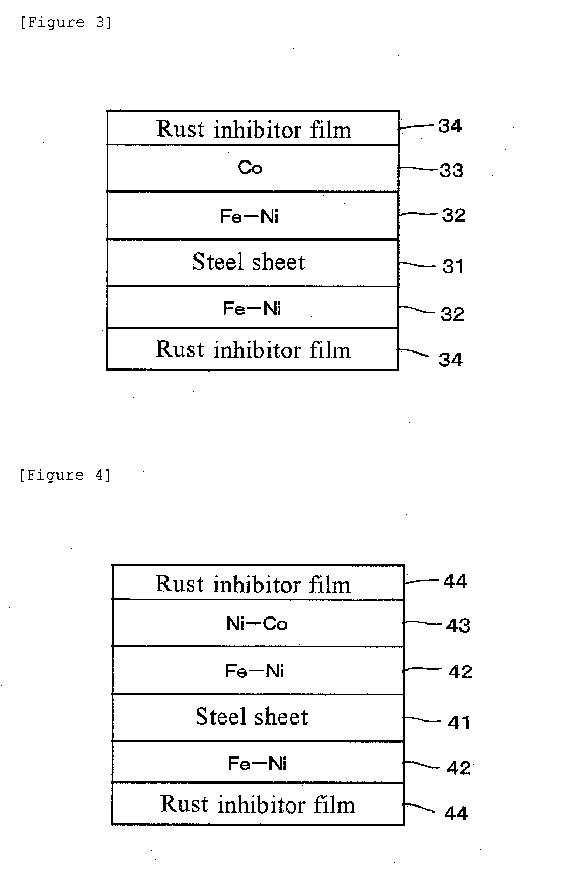

Embodiment 3 of the surface treated steel sheet having a rust inhibitor film in the present invention is described in Figure 3. In Figure 3, 31 is steel sheet, 32 is a Fe-Ni diffusion treated layer, 33 is a Co layer and 34 is a rust inhibitor film.
In Embodiment 3, on the same steel sheet with Embodiment 1, Ni plating treatment is provided, and by heat treatment Ni plating layer is all diffused to achieve a Fe-Ni diffusion treated layer. While the proper temperature and time for the diffusion treatment fall in the same ranges with Embodiment 2, they can be arranged so that all the Ni plating layer turn into Fe-Ni diffusion treated layer. On top of that, ultra thin strike Ni plating is conducted and before the surface strike Ni plated becomes dry, on the one side of the surface the same Co plating treatment with Embodiment 1 is provided.
Then, as is the same with Embodiment 1, on the both sides of the surface treated steel sheet, the rust inhibitor films are provided.

### (Embodiment 4)

Embodiment 4 of the surface treated steel sheet halving a rust inhibitor film in the present invention is described in Figure 4. In Figure 4, 41 is steel sheet, 42 is a Fe-Ni diffusion treated layer, 43 is a Ni-Co layer and 44 is a rust inhibitor film.
In Embodiment 4, on the same steel sheet with Embodiment 1, Ni plating treatment and Co plating treatment are provided.
Then by heat treatment Ni plating layer and Co plating layer are diffused to achieve a Fe-Ni diffusion treated layer and a Ni-Co diffusion treated layer. The proper temperature or time for the diffusion treatment fall in the same ranges with Embodiment 3. Then, as is the same with Embodiment 1, on the both sides of the surface treated steel sheet, the rust inhibitor films are provided. Although in Embodiments from 1 to 4 described above Co plating layer is provided only on the one side of the surface, it can be treated on the both sides.

### EXAMPLES

After providing cold stripping, electrolytic cleaning, annealing, temper rolling, and Ni plating with steel sheet as plated material plate, the surface treated steel sheet of Embodiment 1 was produced by providing Co plating with the one side of the surface.
By drying the surface treated steel sheet provided Co plating by a dryer, immersing in the aqueous solution including rust inhibitor, being deprived of unnecessary amount of rust inhibitor by drawing with urethane roll and drying once again by a dryer, the surface treated steel sheet having a rust inhibitor film was accomplished. In the following Examples 1-5 and Comparative Examples 1∼4, the thickness of the Co plating changes in the range of 0.02 to 0.4µm. And, by changing the composition or density of the rust inhibitor, the thickness of the rust inhibitor film on the surface treated steel sheet was controlled.
And also in Examples 1∼5, the concrete examples for fatty acid amines (organic amines), carboxylic acid, semi rust inhibitor are combined in the following Table 1 to have the rust inhibitor solutions for immersing.

**[Table 1]**

| | Compound ratio of rust inhibitor | | | |
|---|---|---|---|---|
| | Fatty acid amine (Benzonemsthanamine) | Carboxylic acid (acetic acid) | Semi rust inhibitor(benzotriazole) | Concentrartion wt% |
| Example 1 Compound ratio | 8 | 2 | - | 0.1 |
| Example 2 Compound ratio | 10 | 0 | - | 0.3 |
| Example 3 Compound ratio | 6 | 3.95 | 0.05 | 0.7 |
| Example 4 Compound ratio | 5 | 4.9 | 0.1 | 0.7 |
| Example 5 Compound ratio | 4 | 5.95 | 0.05 | 1.0 |

### <Example 1>

After providing Ni plating on the steel sheet, Co plating was provided by 0.02µm. After that, it was immersed into the rust inhibitor solution comprised of fatty acid amine (benzenmethanamine) and carboxylic acid (acetic acid) at the ratio of 8 to 2, roll drawn and dried by a dryer.

### <Example 2>

After providing Ni plating on the steel sheet, Co plating was provided by 0.2µm. After that, it was immersed into the rust inhibitor solution comprised of fatty acid amine as main ingredient, roll drawn and dried by a dryer.

### <Example 3>

After providing Ni plating on the steel sheet, Co plating was provided by 0.3µm. After that, it was immersed into the rust inhibitor solution comprised of fatty acid amine, carboxylic acid and semi rust inhibitor, roll drawn and dried by a dryer.

### <Example 4>

After providing Ni plating on the steel sheet, Co plating was provided by 0.4µm. After that, it was immersed into the rust inhibiter solution comprised of fatty acid amine, carboxylic acid and semi rust inhibitor, roll drawn and dried by a dryer.

### <Example 5>

After providing Ni plating on the steel sheet, Co plating was provided by 0.02µm. After that, it was immersed into the rust inhibitor solution comprised of fatty acid amine, carboxylic acid and semi rust inhibitor, roll drawn and dried by a dryer.

### <Comparative Example 1>

After providing Ni plating on the steel sheet, Co plating was provided by 0.02µm. Laminating of a rust inhibitor film was not conduced.

### <Comparative Example 2>

After providing Ni plating on the steel sheet, Co plating was provided by 0.1µm. After that, it was immersed into the rust inhibitor solution by 0.05% concentration, comprised of fatty acid amine as main ingredient, roll drawn and dried by a dryer.

### <Comparative Example 3>

After providing Ni plating on the steel sheet, Co plating was provided by 0.1µm. After that, it was immersed into the rust inhibitor solution comprised of fatty acid and ethanolamine as main ingredient, roll drawn and dried by a dryer.

### <Comparative Example 4>

After providing Ni plating on the steel sheet, Co plating was provided by 0.4µm. Laminating of rust inhibitor oil was treated on the plated plate.

### <Comparative Example 5>

After providing Ni plating on the steel sheet, Co plating was provided by 0.2µm. After that, it was immersed into the rust inhibitor solution by 3wt% concentration, comprised of fatty acid amine, carboxylic acid and semi rust inhibitor at the ratio of 6 to 3.95 to 0.05, roll drawn and dried by a dryer.

The thickness of the rust inhibitor film provided on the surface treated steel sheet mentioned above was measured in the following. The thickness of the rust inhibitor film was measured by using XPS (X-ray Photoelection Spectroscopy). Concretely, the analysis function along the depth direction by XPS's Ar etching was used. Conducting Ar etching for 30 seconds, gaining the peak of Co and C, from the ratio of the peak square, the atom ratio of Co and C were calculated. Repeating this procedure for 40 times, from the strength ratio of Co and C in the depth direction, the thickness of the rust inhibitor was acquired by the depth where C strength becomes 10%. The depth gained was calculated by SiO₂ conversion.

### (Evaluation)

### <Tarnish test>

The samples made for Examples and Comparative Examples were kept inside of the thermohydrostat at the temperature of 60°C and the humidity of 95% for a week to examine whether it tarnished or not. That is because, when Co is oxidized, electrical conductivity deteriorates and it is concerned that it might give some influence on the characteristic of the steel sheets for battery cases as an option of usage of the present invention. Since the Co layer tarnishes when it is oxidized, in order to examine if the Co plating later that exists underneath the rust inhibitor layer is oxidized, tarnish test was conducted.
In the tarnish test, after drying the samples made for Examples and Comparative Examples, they were examined by visual inspection if there were any stains like specks caused by aggregates.
The specks caused by aggregates are considered that the rust inhibitor was aggregated and solidified. If the concentration of the rust inhibitor is too high, there is a danger of stains occurring like specks on the plated film.
If there are some specks by aggregates in case of applying the surface treated steel sheet in the present invention to products such as battery cases, there is a danger of causing batteries to deteriorate their characteristics such as electrical conductivity. Furthermore, if there are specks inside of the battery case, those parts would net have electrical conductivity but would include some parts where electric resistance would increase.
As a result, it might cause cathode mix and the inside of tune battery case to increase their electric resistance and lead to deterioration of the battery performance.
The thickness of the rust inhibitor films and the evaluation results are shown in Table 2. Table 2 shows that the surface treated steel sheet provided a Co layer on its surface in the present invention, since the rust inhibitor film including fatty acid amine is provided on the surface treated steel sheet, there cannot be discovered tarnish nor specks there.

**[Table 2]**

| | Thickness of rust inhibitor film (Å) SiO₂ conversion | Tarnish | Specks |
|---|---|---|---|
| Comparative Example 1 | 0 | Yes | None |
| Comparative Example 2 | 5 | Yes | None |
| Example 1 | 10 | None | None |
| Example 2 | 50 | None | None |
| Example 3 | 300 | None | None |
| Example 4 | 300 | None | None |
| Example 5 | 500 | None | None |
| Comparative Example 3 Fatty acid + ethanolamine | 300 | Yes | None |
| Comparative Example 4 Rust inhibitor oil | 500 | Yes | None |
| Comparative Example 5 Fatty acid amine + carboxylic acid + semi rust inhibitor | 2000 | None | Yes |

### INDUSTRIAL APPLICABIITY

The surface treated steel sheet in the present invention has an advantage of having excellent corrosion resistance because of having a Co layer. As it is also provided with a rust inhibitor film on its surface, it has excellent oxidation resistance and tarnish resistance, which enables to have excellent electrical conductivity in case of being applied to electric components such as battery cases. Therefore, it has excellent industrial applicability.

### EXPLANATION OF REFERENCE LETTERS

- 11:: Steel sheet
- 12:: Ni plating layer
- 13:: Co layer
- 14:: Rust inhibitor film
- 21:: Steel sheet
- 22:: Fe-Ni diffusion layer
- 23:: Ni plating layer
- 24:: Co layer
- 25:: Rust inhibitor film
- 31:: Steel sheet
- 32:: Fe-Ni diffusion layer
- 33:: Co layer
- 34:: Rust inhibitor film
- 41:: Steel sheet
- 42:: Fe-Ni diffusion layer
- 43:: Ni-Co layer
- 44:: Rust inhibitor film

## Claims

1. A surface treated steel sheet comprising a rust inhibitor film including fatty acid amine whose thickness is 10 ∼ 500Å (SiO₂ conversion) measured by using XPS depth measurement on the surface treated steel sheet that is provided a Co layer on its surface.

2. The surface treated steel sheet according to claim 1, wherein the rust inhibitor film includes fatty acid amine whose thickness is 50 ∼ 300Å (SiO₂ conversion) by using XPS depth measurement.

3. The surface treated steel sheet described according to claim 1 or claim 2, wherein the fatty acid amine is benzenmethanamine or trimethylamine.

4. The surface treated steel sheet according to any one of claims 1 to 3, wherein the rust inhibitor film includes benzotriazole.

5. A method of manufacturing a surface treated steel sheet comprising:
immersing a surface treated steel sheet having a Co layer on a surface into rust inhibitor including fatty acid amine and water as a solvent, and;
drying to form a rust inhibitor film on the surface of the surface treated steel sheet.

6. The method of manufacturing the surface treated steel sheet according to claim 5, wherein the fatty acid amine is benzenmethanamine or trimethylamine.

7. The method of manufacturing the surface treated steel sheet according to claim 5 or claim 6, wherein the rust inhibitor includes benzotriazole.

8. The method of manufacturing the surface treated steel sheet according to any one of claims 5 to 7, wherein the concentration of said rust inhibitor is 0.1 ∼ 1.0 wt%.

9. The method of manufacturing the surface treated steel sheet according to any one of claims 5 to 7, wherein the concentration of said rust inhibitor is 0.3 ∼ 0.7 wt%.
